# EUROPÄISCHE PATENTSCHRIFT

(11) **EP 2 642 844 B1**
(45) Veröffentlichungstag und Bekanntmachung des Hinweises auf die Patenterteilung: **06.05.2015**
(21) Anmeldenummer: 11761325.7
(22) Anmeldetag: 19.09.2011
(51) Int. Cl.: A01F 15/18, A01F 15/07

(54) **ENDLOSES RUNDBALLENPRESSBAND AUS GUMMI ODER GUMMIÄHNLICHEN STOFFEN**
ENDLESS ROUND BALER BELT MADE OF RUBBER OR LIKE MATERIAL
BANDE DE PRESSE SANS FIN À BALLES RONDES, EN CAOUTCHOUC OU MATIÈRES SEMBLABLES AU CAOUTCHOUC

(30) Priorität: 26.11.2010 DE 102010060828
(43) Veröffentlichungstag der Anmeldung: 02.10.2013
(73) Patentinhaber: ContiTech Transportbandsysteme GmbH, 30165 Hannover (DE)
(72) Erfinder: MÖSCHEN-SIEKMANN, Michael, 37176 Nörten-Hardenberg (DE); BEHRENS, Carsten, 37434 Bilshausen (DE)
(74) Vertreter: Preusser, Andrea
(86) Internationale Anmeldenummer: PCT/EP2011/066170
(87) Internationale Veröffentlichungsnummer: WO 2012/069225

(56) Entgegenhaltungen:
- DE-B3-102009 003 588
- US-A1- 2010 251 685

## Beschreibung

Die Erfindung betrifft ein endloses Rundballenpressband aus Gummi oder gummiähnlichen Stoffen mit einem eingebetteten Kern aus einem Festigkeitsträger.

Es ist bekannt, innerhalb einer Rundballenpresse in beispielsweise Heuerntemaschinen mehrere endlose Einzelpressbänder nebeneinander anzuordnen (EP 0125719 A1; US 6170246 B1). Die zwischen den Einzelbändern auftretenden Spalten verursachen Pressgutverluste. Daher wurde bereits versucht, die Anzahl der Einzelbänder zu reduzieren: Der Einsatz von nur einem einzigen Ballehpressband über die gesamte Arbeitsbreite scheiterte bisher daran, dass es bei nur einem Bällenpressband in der Rundballenpresse zu verstärkten Ausbeulungen in der Pressbandmitte kommt, die auf eine unzureichende Entgasung des Pressgutes zurückzuführen sind. Die Pressbandoberfläche des einzigen Ballenpressbandes isoliert die Gasbildung des Pressgutes.

Endlose Ballenpressbänder sind beispielsweise aus der DE 102 43 727 C1 und der DE 10 2009 003 588 B3 bekannt.

Der Erfindung liegt die Aufgabe zugrunde, eine Rundballenpresse der eingangs geschilderten Art zu schaffen, die den Einsatz von Rundballenpressbändern mit großer Breite ermöglicht, ohne dass die Gasbildung des Pressgutes nachteilige Auswirkungen haben kann.

Der Aufgabe wird erfindungsgemäß dadurch gelöst, dass das endlose Rundballenpressband über seinen Umfang verteilt angeordnete Entlüftungsbohrungen aufweist, die das

Rundballenpressband durchdringen. Über die Entlüftungsbohrungen ist eine ausreichende Entgasung des Pressgutes während des Pressvorganges gegeben. Dadurch kommt es vorteilhafterweise zu einem hochverdichteten Pressballen.

In vorteilhafter Ausgestaltung der Erfindung sind die Entlüftungsbohrungen in einer geordneten Matrix angeordnet. Dadurch wird eine maschinelle Lochung des Rundballenpressbandes ermöglicht.

Vorzugsweise sind die Entlüftungsbohrungen auf einer über den Umfang verlaufenden Linie hintereinander angeordnet. Diese Linienausrichtung der Entlüftungsbohrungen in einer Lochreihe erlaubt das gezielte Einbringen der Entlüftungsbohrungen in vordefinierte Bereiche des Rundballenpressbandes.

In vorteilhafter Ausbildung der Erfindung sind über die Breite des Rundballenpressbandes verteilt parallel verlaufende Umfangslochreihen angeordnet. Die Entlüftungsbohrungen liegen auf mehreren parallelen Ebenen hintereinander.

Je nach zu verarbeitendem Pressgut wird die Anzahl der Entlüftungsbohrungen über den Umfang gewählt. Eine vorteilhafte Lochteilung in Matrix angeordneten Entlüftungsbohrungen ist in dem Bereich von 10 bis 50mm in Laufrichtung gegeben.

In weiterer vorteilhafter Ausgestaltung der Erfindung sind die Entlüftungsbohrungen über den gesamten Bandumfang frei verteilt angeordnet. Diese freie Verteilung ist dann von Vorteil, wenn die Quersteifigkeit des Rundballenpressbandes nicht geschwächt werden soll.

In vorteilhafter Ausgestaltung der Erfindung sind die Lüftungsbohrungen mit einem Bohrungsdurchmesser von 2 bis 7mm ausgestattet. Der Durchmesserbereich von 2 bis 7mm führt zu guten Entgasungsverhältnissen des zu verarbeitenden Pressgutes wie Stroh, Heu oder Silage.

Durch die Erfindung werden Verluste in Rundballenpressen minimiert, da die Rundballenpresse mit weniger Pressbändern bzw. sogar nur einem Pressband über die gesamte Arbeitsbreite ausgestattet werden kann.

Die Verwendung von weniger oder sogar nur einem Pressband hat den Vorteil, dass die zeitaufwendige Auswahl gleichlanger Pressbänder oder die individuelle Einstellung jedes Pressbandes in der Rundballenpresse zur Erzielung eines genauen Pressbandlaufs in der Rundballenpresse minimiert wird bzw. entfällt.

Sollte das Pressgut der Rundballenpresse feucht zugeführt werden, kann die Feuchtigkeit beim Pressvorgang durch die Entlüftungsbohrungen zumindest zu einem hohen Anteil abgeführt werden.

Die Einzelpressbänder für eine Rundballenpresse mit mehreren endlosen Einzelpressbändern werden üblicher Weise aus einem breiten Pressband durch Längsschnitte hergestellt. Weist dieses Ausgangspressband ein Gewebe als Festigkeitsträger auf, kommt es an den Schnittkanten zu einem Aufribbeln des Gewebes Dieses führt zu Schäden an den Gummikanten der Einzelpressbänder. Durch den Einsatz des erfindungsgemäßen Pressbandes über die gesamte Pressbreite ist kein Längsschnitt durch ein Ausgangspressband nötig. Es verbleibt daher eine verschleißfeste Gummikante des Pressbandes, die bei der Herstellung entsteht.

Ein weiterer Vorteil ist in einer geringeren Verschmutzung der Rundballenpresse gegeben, die durch die geringeren Spaltverluste eintritt.

Anhand der Zeichnung werden nachstehend in schematischer Darstellung zwei Ausführungsbeispiele der Erfindung näher erläutert. Es zeigt
- Fig. 1: ein endloses Rundballenpressband mit umfangsmäßig verlaufenden Reihen von Entlüftungsbohrungen;
- Fig. 2: eine Detailabwicklung des Rundballenpressbandes gemäß Fig. 1;
- Fig. 3: ein endloses Rundballenpressband mit frei über den Umfang verteilten Entlüftungsbohrungen;
- Fig. 4: eine Detailabwicklung des Rundballenpressbandes gemäß Fig. 3.

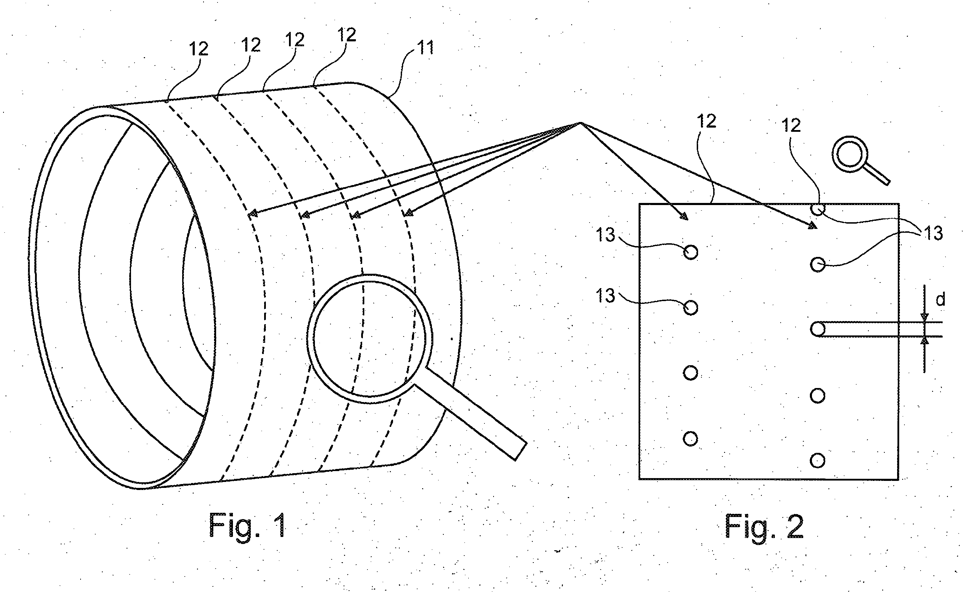

Das in der Fig. 1 dargestellte endlose Rundballenpressband 11 besteht aus einer äußeren und einer inneren Gummideckplatte (hier nicht dargestellt), zwischen denen ein Gewebeverstärkungsaufbau angeordnet ist. Über die Breite des Rundballenpressbandes 11 sind vier parallel nebeneinander liegende Lochreihen 12 angeordnet. Diese Lochreihen weisen in regelmäßigen Abständen hintereinander angeordnete Entlüftungsbohrungen 13 (Fig. 2 im Ausschnitt) auf. Die Entlüftungsbohrungen 13 einer Lochreihe 12 sind zu den Entlüftungsbohrungen 13 der benachbarten Lochreihe 12 versetzt angeordnet. Der Durchmesser der Entlüftungsbohrungen 13 beträgt 5mm.

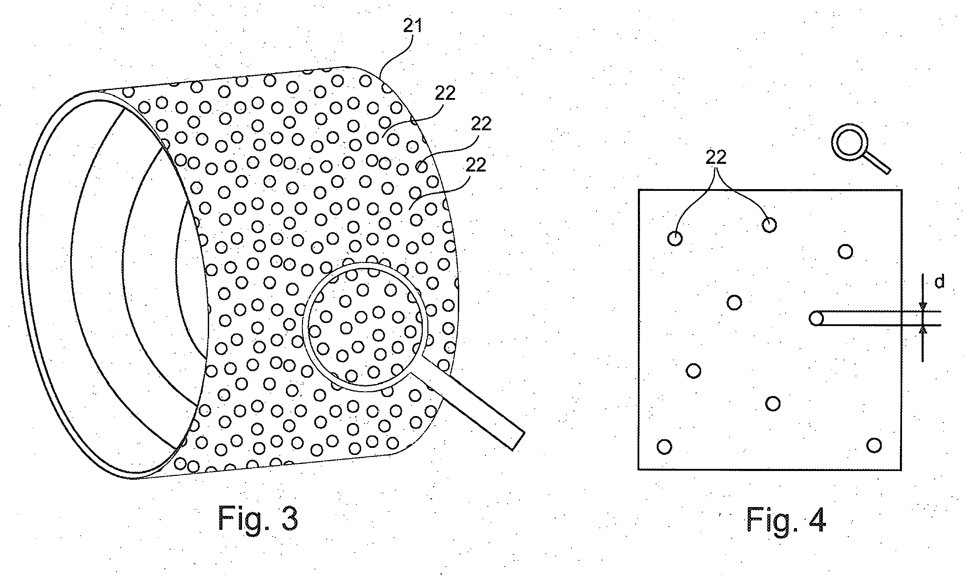

Das in der Fig. 3 dargestellte endlose Rundballenpressband 21 besteht ebenfalls aus einer inneren und einer äußeren Gummideckplatte, zwischen denen ein Gewebeverstärkungsaufbau angeordnet ist. Das Rundballenpressband 21 ist mit über seinen Umfang frei verteilten Entlüftungsbohrungen 22 versehen. In der Fig. 4 wird in einem Detailausschnitt eine schematische Ansicht der Verteilung der Entlüftungsbohrungen 22 gezeigt, wobei der Durchmesser der Entlüftungsbohrungen 5mm beträgt.

## Patentansprüche

1. Endloses Rundballenpressband aus Gummi oder gummiähnlichen Stoffen mit einem eingebetteten Kern aus einem Festigkeitsträger,
**dadurch gekennzeichne** t,dass das endlose Rundballenpressband (11; 21) über seinen Umfang verteilt angeordnete Entlüftungsbohrungen (13; 22) aufweist, die das Rundballenpressband (11; 21) durchdringen.

2. Endloses Rundballenpressband nach Anspruch 1, **dadurch gekennzeichnet, dass** die Entlüftungsbohrungen (13) in einer geordneten Matrix angeordnet sind.

3. Endloses Rundballenpressband nach Anspruch 1 oder 2, **dadurch gekennzeichnet, dass** die Entlüftungsbohrungen (13) auf einer über den Umfang verlaufenden Linie (12) hintereinander angeordnet sind.

4. Endloses Rundballenpressband nach Anspruch 3, **dadurch gekennzeichnet, dass** über die Breite des Rundballenpressbandes (11) verteilt parallel verlaufende Umfangslochreihen (12) angeordnet sind.

5. Endloses Rundballenpressband nach Anspruch 3 oder 4, **dadurch gekennzeichnet, dass** der Lochabstand der Entlüftungsbohrungen (13) zueinander in Laufrichtung 10 bis 50mm beträgt.

6. Endloses Rundballenpressband nach Anspruch 1, **dadurch gekennzeichnet, dass** die Entlüftungsbohrungen (22) in freier Verteilung über den Umfang des Rundballenpressbandes (21) angeordnet sind.

7. Endloses Rundballenpressband nach einem der Ansprüche 1 bis 6, **dadurch gekennzeichnet, dass** der Durchmesser der Entlüftungsbohrungen (13; 22) 2 bis 7mm beträgt.

## Claims

1. Endless round baler belt made of rubber or rubberlike materials with an embedded core of a strengthening support,
**characterized in that** the endless round baler belt (11; 21) has venting bores (13; 22) distributed over the circumference thereof and penetrating the round baler belt (11; 21).

2. Endless round baler belt according to Claim 1, **characterized in that** the venting bores (13) are arranged in an ordered matrix.

3. Endless round baler belt according to Claim 1 or 2, **characterized in that** the venting bores (13) are arranged one behind the other on a line (12) running over the circumference.

4. Endless round baler belt according to Claim 3, **characterized in that** parallel running circumferential series of holes (12) are distributed over the width of the round baler belt (11).

5. Endless round baler belt according to Claim 3 or 4, **characterized in that** the spacing of holes of the venting bores (13) from one another in the running direction is 10 to 50 mm.

6. Endless round baler belt according to Claim 1, **characterized in that** the venting bores (22) are arranged in free distribution over the circumference of the round baler belt (21).

7. Endless round baler belt according to one of Claims 1 to 6, **characterized in that** the diameter of the venting bores (13; 22) is 2 to 7 mm.

## Revendications

1. Bande de presse sans fin à balles rondes en caoutchouc ou matières semblables au caoutchouc, comprenant un noyau encastré constitué d'un renfort,
**caractérisée en ce que** la bande de presse sans fin à balles rondes (11 ; 21) présente des orifices de désaérage (13 ; 22) répartis sur sa périphérie, lesquels traversent la bande de presse à balles rondes (11 ; 21).

2. Bande de presse sans fin à balles rondes selon la revendication 1, **caractérisée en ce que** les orifices de désaérage (13) sont disposés dans une matrice ordonnée.

3. Bande de presse sans fin à balles rondes selon la revendication 1 ou 2, **caractérisée en ce que** les orifices de désaérage (13) sont disposés les uns derrière les autres sur une ligne (12) s'étendant sur la périphérie.

4. Bande de presse sans fin à balles rondes selon la revendication 3, **caractérisée en ce que** des rangées d'orifices périphériques (12) s'étendant parallèlement sont disposées de manière répartie sur la largeur de la bande de presse à balles rondes (11).

5. Bande de presse sans fin à balles rondes selon la revendication 3 ou 4, **caractérisée en ce que** la distance entre les orifices des orifices de désaérage (13) les uns par rapport aux autres dans la direction d'avance est de 10 à 50 mm.

6. Bande de presse sans fin à balles rondes selon la revendication 1, **caractérisée en ce que** les orifices de désaérage (22) sont disposés de manière répartie librement sur la périphérie de la bande de presse à balles rondes (21).

7. Bande de presse sans fin à balles rondes selon l'une quelconque des revendications 1 à 6, **caractérisée en ce que** le diamètre des orifices de désaérage (13 ; 22) est de 2 à 7 mm.
